# EUROPEAN PATENT SPECIFICATION

(11) **EP 1 198 499 B1**
(45) Date of publication and mention of the grant of the patent: **31.08.2005**
(21) Application number: 01901116.2
(22) Date of filing: 11.01.2001
(51) Int. Cl.: C08K 3/22, C08L 23/02, H01B 3/44

(54) **A FLAME-RETARDANT POLYMER COMPOSITION**
EINE FLAMMHEMMENDE POLYMERZUSAMMENSETZUNG
COMPOSITION POLYMERE IGNIFUGE

(30) Priority: 12.01.2000 DK 200000037
(43) Date of publication of application: 24.04.2002
(73) Proprietor: THORSMAN & CO AB, 611 29 Nyköping (SE)
(72) Inventor: JEPPESEN, Per, DK-2200 Copenhagen N (DK)
(74) Representative: Karlsson, Leif Karl Gunnar
(86) International application number: PCT/DK2001/000018
(87) International publication number: WO 2001/051554

(56) References cited:
- EP-A- 0 207 734
- EP-A- 0 331 358
- EP-A- 0 393 813
- EP-A- 0 546 841
- PIRELLI: "LOW-SMOKE SELF-EXTINGUISHING ELECTRICAL CABLE AND FLAME-RETARDANT COMPOSITION USED THEREIN" RESEARCH DISCLOSURE,GB,INDUSTRIAL OPPORTUNITIES LTD. HAVANT, no. 407, March 1998 (1998-03), pages 245-262, XP000773863 Emsworth GB ISSN: 0374-4353

## Description

The present invention relates to a relatively stiff flame-retardant polymer composition having high mechanical strength for use in the production of polymer units, such as electric and electronic parts, constructional materials, waste pipes, gutter, automobile parts, cabinets for televisions, computers and similar equipments, profiles and fittings, such as fittings for cables, electric switches and fittings in buildings, in general, and generally where flame retardant initial stabile materials are needed.

Such polymer units should in general be of a relatively stiff material, which in some circumstances should also be non-conductive, and be able to function as electrical insulators. Fittings of this type are normally prepared from polymer materials having a flexural modulus above 1000 MPa. Examples of known polymer compositions having a high flexural modulus are polycarbonate/acrylonitril-butadien-styren (PC/ABS) blends, acrylonitril-styren-acryl (ASA), polyphenyleneoxide (PPO), polyamide 6, polyamide 66, acrylonitril-butadien-styren polymer (ABS), and Polyvinyl-chloride (PVC).

Some of the above mentioned polymer compositions having a flexural modulus above 1000 Mpa contain halogen-containing organic compounds providing the polymer composition with flame-retardant properties.

Halogen-containing polymers produce corrosive and poisonous halogenous gasses on combustion. Therefore, such halogen-containing polymers are unwanted in most applications, particular for use in buildings.

Different replacements for the flame-retardant have been suggested as described in the introduction of US patent 5,945,467. In order to provide a polymer material with acceptable flame-retardant properties, a relatively large amount of flame-retardant must be included in the material. Most of the flame-retardant suggested in the prior art, e.g. ammonium polyphosphate and metal hydrate, when added to a polymer composition in even the lowest possible amount, results in a polymer composition with very reduced mechanical strength, and with a flexural modulus below 1000 Mpa, and thus not suitable for the above described use.

A few kinds of coated flame-retardants have shown to be useful as flame-retardant in high flexural modulus polymer compositions. In US patent 4,525,494 it has e.g. been suggested to use a fatty acid-coated aluminiumtrihydrate as a flame-retardant.

This coated flame-retardant is, however, expensive, and consequently, a polymer composition containing this coated flame-retardant is also very expensive. Furthermore, it has also been observed, that coated fire retardants provide polymer compositions with a great deal of stress whitening. Stress whitening can be observed when the material is subjected to small deformations at room temperature. The more stress whitening in a material, the more whitening will be observed in the area of deformation of the material. Stress whitening is in general unwanted, because it often leads to discoloration of the articles made of material with high stress whitening, and furthermore this discoloration can appear at even small material deformations.

The objective of the present invention is to provide a substantially halogen-free, flame-retardant polymer composition, which does not exhibit the above-mentioned drawbacks.

In particular, it is an objective to provide a substantially halogen-free, flame-retardant polymer composition having a high flexural modulus, which is less expensive than the above-mentioned known halogen-free, flame-retardant polymer compositions.

These objectives are achieved with the flame-retardant polymer composition according to the invention as defined in the claims.

It has surprisingly been found, that a particular polymer mixture can be compounded with up to 75 % by weight of fillers including inorganic flame-retardant selected from the group consisting of magnesium hydroxide, aluminium tri-hydrate, huntite, hydromagnesite and mixtures hereof, and still maintain a relative high flexural modulus, e.g. a flexural modulus above 1000 Mpa.

The invention therefore includes a flame-retardant polymer composition, essentially consisting of a specific polymer mixture and one or more fillers.

The flame-retardant polymer composition according to the invention should contain at least 25 %, preferably between 40 and 50 % by weight of the polymer mixture and the remaining material should essentially be filler material including one or more flame-retardants.

The fillers include the inorganic flame-retardants selected from the group consisting of magnesium hydroxide (MDH), aluminium tri-hydrate (ATH), huntite, hydromagnesite. Preferably, the composition should contain at least 25 % by weight of the total composition of one or more of the above-mentioned inorganic flame-retardants. For most applications, it is preferred that the composition should contain at least 40 %, more preferably at least 50 % by weight of the total composition of one or more of the above-mentioned inorganic flame-retardants.

The average particle size of the flame-retardants should preferably be between 0,5 and 10 µm, and the average surface area should preferably be between 1 and 15 m²/g. If the composition includes MDH, the MDH particles should preferably have an average particle size of between 1 and 4 µm, and the average surface area should preferably be between 4 and 10 m²/g. If the composition includes ATH, the ATH particles should preferably have an average particle size of between 1 and 5 µm, and the average surface area should preferably be between 3 and 10 m²/g.

The shape of the flame-retardant particles may preferably be relatively flat or flake like, since such shaped particles may provide the composition with improved stiffness.

In a preferred embodiment, the composition contains substantially no other fillers than the above-mentioned flame-retardants. However, in order to save costs, other filler materials may be included in the composition. The amount of other filler materials should preferably not exceed 30 % by weight of the total composition, and more preferably the amount of other fillers should not exceed 10 % by weight of the total composition. The other fillers include in principle any type of inorganic particulated material e.g. calcium carbonate, dolomite, talc, china clay (Al silicate), siliceous earth (Al silicate/quartz), wollastonite, pyrogenic silica, quartz, cristobalite, mica, barytes, gypsum, slade, pastorite (Mg, Al, K silicate, glass fibres and beads. The other filler materials should preferably have an average grain size less than 50 µm, more preferably less than 10 µm, or a fibre length of less than 0.2 mm, preferably less than 0.1 mm.

In a preferred embodiment the flame-retardant polymer composition according to the invention contains between 30 and 75 % by weight, more preferably between 35 and 65 % by weight, and even more preferably between 40 and 55 % by weight of one or more inorganic flame-retardants.

The polymer mixture includes at least 50 %, preferably at least 75 %, and more preferably between 85 % and 100 % by weight of a polymer or a combination of polymers selected from the group consisting of homopolymers and copolymers of PP, HDPE, LLDPE, LDPE, EVA, EBA, EEA and EMA. At least 5 %, preferably at least 10 % by weight of the polymers in the polymer mixtures should be modified with maleic acid anhydride. The amount of maleic acid anhydride in the maleic acid anhydride modified polymers should preferably be between 0.1 and 3 % by weight, preferably about 1 % by weight of the modified polymer.

In general, any of the polymers in the polymer mixture may contain modified with maleic acid anhydride, but it is preferred that the maleic acid anhydride modified polymer or polymers are one or more of the polymers HDPE, LLDPE and LDPE, most preferably LLDPE. The polymer or polymers may be modified with maleic acid anhydride using any conventional method known to the skilled person. Basically, there are two different methods of modifying polymers with maleic acid anhydride, namely either by grafting the maleic acid anhydride onto a polymer, or by copolymerising the maleic acid anhydride with the monomers in a reactor to obtain the finished polymer.

Preferably the maleic acid anhydride constitutes functional groups in an amount higher than 10⁻³ gram equivalent based on 1 gram of the polymers, preferably higher than 10⁻² gram equivalent based on 1 gram of the polymers. By having such an amount of functional groups the material achieves better properties with regard to mechanical strength and ageing.

In the preparation of the polymer composition according to the present invention, it is also possible to mix one or more polymers, one or more fillers, one or more radical generators and maleic anhydride in one step. This method is in general disclosed in WO 99/48975, NKT Research Center.

It is most preferred that the maleic acid anhydride is grafted onto the polymer.

The polymer mixture includes at least one of the polymers PP and HDPE. It is preferred that the amount of PP homopolymer, PP copolymer, HDPE or a combination thereof should be at least 35 %, preferably at least 50 % by weight of the polymer mixture. The PP copolymer includes PP/olefin polymers, wherein the PP shear exceeds 50 % by weight.

In the present application HDPE designates a PE having a density above 940 kg/m³, LDPE designates a PE having a density between 915 and 940 kg/m³, and LLDPE designates a linear PE having a density below 940 kg/m³, preferably between 860 and 940 kg/m³. LLDPE prepared by using metallocen catalyst typically has a density below 915 kg/m³. LLDPE prepared by other methods and having densities between 915 and 940 kg/m³, are also very useful in the polymer composition according to the invention.

A preferred LLDPE for use in the polymer mixture is Engage marketed by Dupont and Exact marketed by Exxon.

In a specific embodiment of the flame-retardant polymer composition according to the invention, the polymer mixture includes between 98 and 50 %, preferably between 80 and 50 % by weight of PP homopolymer, PP copolymer or a mixture of these. The polymer mixture may or may not contain any further of the polymers HDPE, LLDPE, LDPE, EVA, EBA, EEA and EMA but in a preferred embodiment the polymer mixture includes at least 50 % by weight of PP homopolymer or PP copolymer or a combination, and at least 10 % by weight of EVA, EBA, EEA, EMA or a combination thereof.

In another preferred embodiment of the invention, the polymer mixture of the flame-retardant polymer composition includes at least 50% by weight of the polymer mixture of HDPE.

It is most preferred that the polymer mixture includes at least 10 %, preferably at least 15 % by weight of EVA, EBA, EEA, EMA or a combination or a copolymer thereof. These compositions provide the resulting composition with flexibility.

In a particular preferred embodiment, the polymer mixture includes at least 10 %, preferably at least 15 % by weight of the polymer mixture of EVA, EBA, EEA, EMA or a combination thereof, the polymer mixture preferably includes at least 10 %, preferably at least 15 % by weight of EVA. The polymers EVA, EBA, EEA, EMA or a combination thereof, in itself has at flame-repressing properties, and when the composition includes these polymers the amount of flame-retardant may be reduced e.g. by up to 10 % by weight.

Also it is preferred that the polymer mixture includes between 5 and 10 % by weight of LLDPE, LDPE or a combination thereof.

In a particular preferred embodiment, the polymer mixture includes at least 10 % by weight of maleic acid anhydride modified LLDPE, at least 40 % by weight of HDPE, and at least 10 % by weight of EVA.

The composition may preferably be produced by mixing the polymers e.g. in a batch blender or an industrial polymer blender, an extruder, etc., at elevated temperature, e.g. 150-170 °C, and adding the fillers and continuing mixing to a homogenous material is obtained.

The resulting composition preferably has a flexural modulus above 800 MPa, preferably above 1000 MPa e.g. between 1500 and 2000 Mpa measured according to ASTM D790.

The invention also relates to the use of the flame-retardant polymer composition described above for cable conduits, conduit boxes, sockets, switches, walls, panels, linings and cabinets.

The flame-retardant composition according to the invention may advantageously by used in building industry, ships, aircrafts, trains, and vehicles.

### Examples

The materials used in the examples was as follows:
PP/PE: PB-130 obtained from Repsol.
PP homopolymer: PP-050 obtained from Repsol.
Fatty acid coated MDH: FR 20120 obtained from Dead Sea bromine group.
Maleic anhydride grafted LLDPE: Fusabond MB 226D obtained from Dupont.
HDPE: Eraclene MP90 obtained from Polimeri Europa.
EVA: Greenflex HN70 obtained from Polimeri Europa.
ATH 1: Apyral 60 obtained from Nabaltec.
ATH 2: Alolt 59 AF obtained from the Danish distributor Bjørn Thorsen.
Titandioxid: Kronos 2220 obtained from KRONOS.

6 different polymer compositions A-F were prepared as follows:

The polymeric raw materials were mixed in a batch blender and the temperature was raised to about 160 °C. When the polymer mixture was substantially homogenous, flame-retardant was added, and the mixing was continued until a homogenous polymer composition was obtained.

The ingredients and the amounts in parts by weight in each of the polymer compositions are listed in table 1. The polymer compositions A and B are according to the prior art, whereas the polymer compositions C-F are according to the invention.

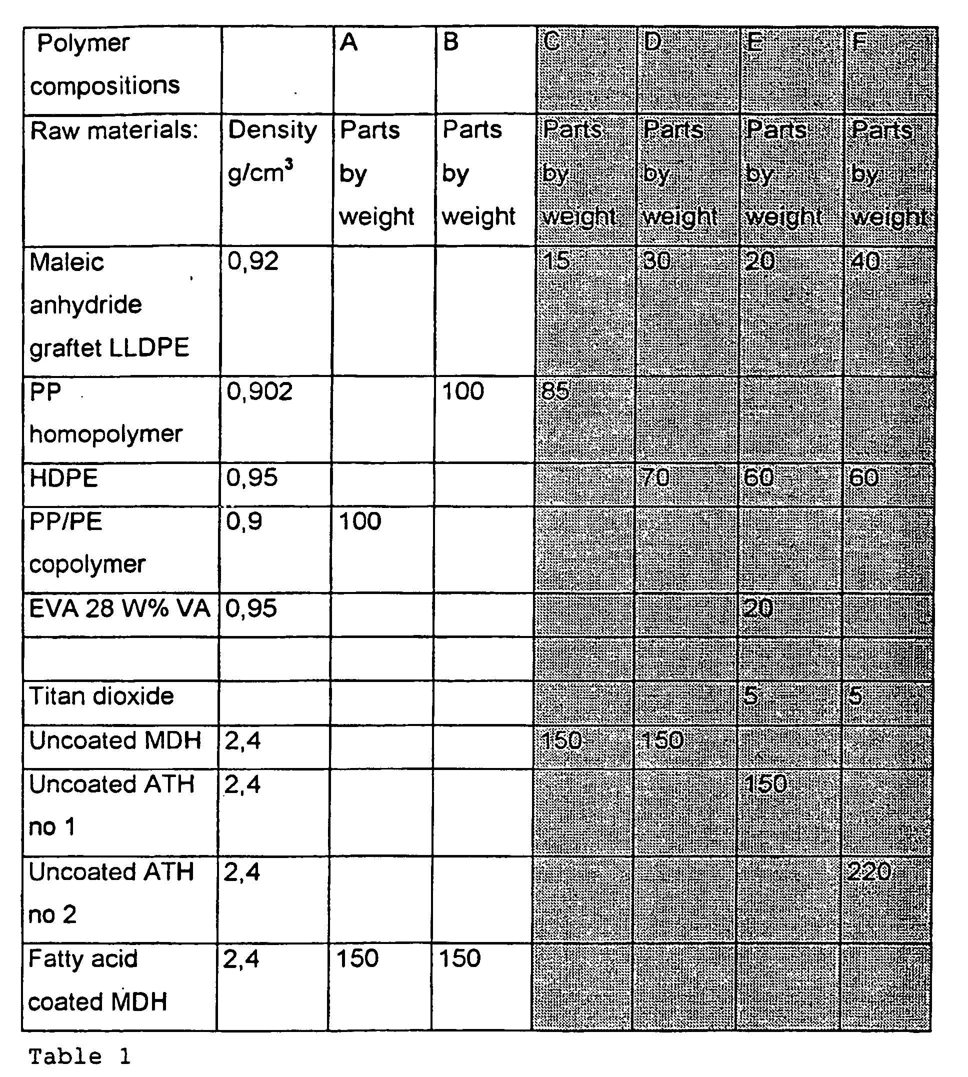

The prepared polymer compositions were extruded and their mechanical properties were tested. The results of the tests are shown in table 2. The test was carried out according to ASTM D638 and D790.

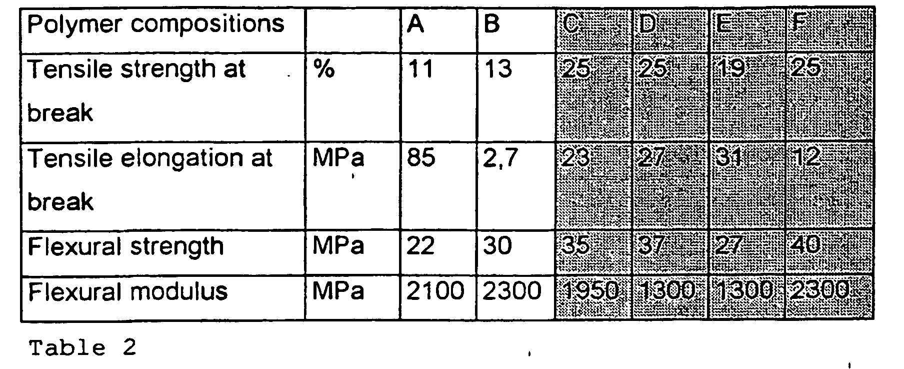

From the results, it can be seen that the compositions according to the invention have very improved tensile strength and flexural strength. The tensile elongation and flexural modulus of the composition according to the invention are on the same level as the compositions according to the prior art. Finally, it should be observed that the tested compositions according to the prior art are much more expensive than the compositions according to the invention.

## Claims

1. A flame retardant polymer composition comprising
A) 35-65wt% calculated on the total weight of the composition of a filler comprising an inorganic flame-retardant selected from the group consisting of magnesium hydroxide, aluminium trihydrate, huntite, hydromagnesite and mixtures hereof,
B) 65-35wt% calculated on the total weight of the composition of a polymer mixture, which polymer mixture comprises:
i.) 35-85wt% of one or a combination of polymers selected from the group consisting homopolymers and copolymers of PP, and HDPE,
ii.) at least 5wt% calculated on the weight of B) of PE modified with maleic acid anhydride, said maleic acid anhydride constituting functional groups in an amount higher than 10⁻³ gram equivalent based on 1 gram of the polymers, and
iii.) at least10wt% calculated on the weight of B) of one or a combination of polymers selected from the group consisting of EVA, EBA, EEA, and EMA.

2. A flame-retardant polymer composition according to claim 1, wherein the composition contains between 40 and 55 % by weight of the polymer mixture B) and the remaining material being filler materials including one or more flame-retardants.

3. A flame-retardant polymer composition according to any of claims 1 or 2, wherein the composition contains between 40 and 55 % by weight of one or more inorganic flame-retardants.

4. A flame-retardant polymer composition according to any of claims 1, 2 or 3, wherein the polymer mixture includes at least 50 % by weight of PP homopolymer, PP copolymer, HDPE or a combination thereof.

5. A flame-retardant polymer composition according to any of claims 1, 2, 3 or 4, wherein the polymer mixture includes at least 15 % by weight of EVA, EBA, EEA, EMA or a combination or a copolymer thereof.

6. A flame-retardant polymer composition according to any of the preceding claims, wherein the polymer mixture includes at least 50 % by weight of PP homopolymer or PP copolymer or a combination.

7. A flame-retardant polymer composition according to any of the preceding claims where the maleic acid anhydride constitute functional groups in an amount higher than 10⁻² gram equivalent based on 1 gram of the polymers

8. A flame-retardant polymer composition according to any of claims 1-5, wherein the polymer mixture includes at least 40% by weight of the polymer mixture of HDPE.

9. A flame-retardant polymer composition according to any of claims 7-8, wherein the polymer mixture includes at least 10 %, preferably at least 15 % by weight of EVA.

10. A flame-retardant polymer composition according to any of claims 7-9, wherein the polymer mixture includes at least 10 % by weight of maleic acid anhydride modified LLDPE.

11. A flame-retardant polymer composition according to any of the preceding claims, wherein the composition has a flexural modulus above 800 MPa, preferably above 1000 MPa measured according to ASTM D790.

12. Use of the flame-retardant polymer composition according to any of claims 1-11 for the manufacture of cable conduits, conduit boxes, sockets, switches, walls, panels, linings and cabinets.

## Patentansprüche

1. Flammenhemmende Polymerzusammensetzung, umfassend:
A) 35 bis 65 Gew.%, berechnet anhand des Gesamtgewichts der Zusammensetzung, eines Füllstoffs umfassend einen anorganischen Flammenhemmstoff, ausgewählt aus der Gruppe bestehend aus Magnesiumhydroxid, Aluminiumtrihydrat, Huntit, Hydromagnesit und Mischungen davon,
B) 65 bis 35 Gew.%, berechnet anhand des Gesamtgewichts der Zusammensetzung, einer Polymermischung, wobei die Polymermischung umfaßt:
i) 35 bis 85 Gew.% eines oder einer Kombination von Polymeren, ausgewählt aus der Gruppe bestehend aus Homopolymeren und Copolymeren von PP und HDPE,
ii) mindestens 5 Gew.%, berechnet anhand des Gewichts von B) von PE modifiziert mit Maleinsäurenhydrid, wobei das Maleinsäureanhydrid funktionelle Gruppen in einer Menge von größer als 10⁻³ g Äquivalent auf Basis von 1 g des Polymers darstellt, und
iii) mindestens 10 Gew.%, berechnet anhand des Gewichts von B) von einem oder einer Kombination von Polymeren, ausgewählt aus der Gruppe bestehend aus EVA, EBA, EEA und EMA.

2. Flammenhemmende Polymerzusammensetzung gemäß Anspruch 1, worin die Zusammensetzung zwischen 40 und 55 Gew.% der Polymermischung B) enthält und das restliche Material Füllstoffmaterialien, einschließlich eines oder mehrerer Flammenhemmstoffe, ist.

3. Flammenhemmende Polymerzusammensetzung gemäß einem der Ansprüche 1 oder 2, worin die Zusammensetzung zwischen 40 und 55 Gew.% eines oder mehrerer anorganischer Flammenhemmstoffe enthält.

4. Flammenhemmende Polymerzusammensetzung gemäß einem der Ansprüche 1, 2 oder 3, worin die Polymermischung mindestens 50 Gew.% von PP-Homopolymer, PP-Copolymer, HDPE oder eine Kombination davon einschließt.

5. Flammenhemmende Polymerzusammensetzung gemäß einem der Ansprüche 1, 2, 3 oder 4, worin die Polymermischung mindestens 15 Gew.% EVA, EBA, EEA, EMA oder eine Kombination oder ein Copolymer davon einschließt.

6. Flammenhemmende Polymerzusammensetzung gemäß einem der vorangehenden Ansprüche, worin die Polymermischung mindestens 50 Gew.% PP-Homopolymer oder PP-Copolymer oder eine Kombination einschließt.

7. Flammenhemmende Polymerzusammensetzung gemäß einem der vorangehenden Ansprüche, worin das Maleinsäureanhydrid funktionelle Gruppen in einer Menge von mehr als 10⁻² g Äquivalent auf Basis von 1 g der Polymere darstellt.

8. Flammenhemmende Polymerzusammensetzung gemäß einem der Ansprüche 1 bis 5, worin die Polymermischung mindestens 40 Gew.% der Polyermischung von HDPE enthält.

9. Flammenhemmende Polymerzusammensetzung gemäß einem der Ansprüche 7 bis 8, worin die Polymermischung mindestens 10 Gew.%, vorzugsweise mindestens 15 Gew.%, EVA enthält.

10. Flammenhemmende Polymerzusammensetzung gemäß einem der Ansprüche 7 bis 9, worin die Polymermischung mindestens 10 Gew.% mit Maleinsäureanhydrid modifiziertes LLDPE enthält.

11. Flammenhemmende Polymerzusammensetzung gemäß einem der vorangehenden Ansprüche, worin die Zusammensetzung ein Biegemodul über 800 MPa, vorzugsweise über 1.000 MPa, gemessen gemäß ASTM D790, besitzt.

12. Verwendung der flammenhemmenden Polymerzusammensetzung gemäß einem der Ansprüche 1 bis 11 zur Herstellung von Kabelkanälen, Abzweigedosen, Buchsen, Schaltern, Wänden, Verkleidungen und Kästen.

## Revendications

1. Composition de polymères ignifuges comprenant :
A) 35 à 65 % en poids, calculé sur la base du poids total de la composition, d'une charge comprenant un ignifuge inorganique choisi dans le groupe formé par l'hydroxyde de magnésium, le trihydrate d'aluminium, la huntite, l'hydromagnésite et des mélanges de ceux-ci,
B) 65 à 35 % en poids calculé sur la base du poids total de la composition, d'un mélange de polymères, lequel mélange de polymères comprend :
i.) 35 à 85 % en poids, d'un polymère ou d'une association de polymères choisis dans le groupe formé par les homopolymères et les copolymères PP et le HDPE,
ii.) au moins 5 % en poids, calculé sur la base du poids de B), de PE modifié avec de l'anhydride d'acide maléique, ledit anhydride d'acide maléique constituant des groupes fonctionnels en une quantité supérieure à 10⁻³ grammes équivalent basé sur 1 gramme de polymères, et
iii.) au moins 10 % en poids, calculé sur la base du poids de B), d'un polymère ou d'une association de polymères choisis dans le groupe formé par EVA, EBA, EEA et EMA.

2. Composition de polymères ignifuges selon la revendication 1, dans laquelle la composition contient entre 40 et 55 % en poids du mélange de polymères B), le matériau restant étant des matériaux de charge incluant un ou plusieurs ignifuges.

3. Composition de polymères ignifuges selon l'une quelconque des revendications 1 ou 2, dans laquelle la composition contient entre 40 et 55 % en poids d'un ou de plusieurs ignifuges inorganiques.

4. Composition de polymères ignifuges selon l'une quelconque des revendications 1, 2 ou 3, dans laquelle le mélange de polymères comprend au moins 50 % en poids d'un homopolymère de propylène, d'un copolymère de propylène, de HDPE ou d'une association de ceux-ci.

5. Composition de polymères ignifuges selon l'une quelconque des revendications 1, 2, 3 ou 4, dans laquelle le mélange de polymères comprend au moins 15 % en poids de EVA, EBA, EEA, EMA ou une association ou un copolymère de ceux-ci.

6. Composition de polymères ignifuges selon l'une quelconque des revendications précédentes, dans laquelle le mélange de polymères comprend au moins 50 % en poids d'un homopolymère de propylène, d'un copolymère de propylène ou d'une association de ceux-ci.

7. Composition de polymères ignifuges selon l'une quelconque des revendications précédentes où l'anhydride d'acide maléique constitue des groupes fonctionnels en une quantité supérieure à 10⁻² grammes équivalent basé sur 1 gramme de polymères.

8. Composition de polymères ignifuges selon l'une quelconque des revendications 1 à 5, dans laquelle le mélange de polymères comprend au moins 40 % en poids de HDPE.

9. Composition de polymères ignifuges selon l'une quelconque des revendications 7 à 8, dans laquelle le mélange de polymères comprend au moins 10 %, de préférence au moins 15 % en poids de EVA.

10. Composition de polymères ignifuges selon l'une quelconque des revendications 7 à 9, dans laquelle le mélange de polymères comprend au moins 10 % en poids de LLDPE modifié par de l'anhydride d'acide maléique.

11. Composition de polymères ignifuges selon l'une quelconque des revendications précédentes, dans laquelle la composition présente un module de flexion supérieur à 800 MPa, de préférence supérieur à 1000 MPa mesuré selon l'ASTM D790.

12. Utilisation d'une composition de polymères ignifuges selon l'une quelconque des revendications 1 à 11 pour la fabrication de conduits de câbles, de boites de dérivation, de douilles, d'interrupteurs, de parois, de panneaux, de revêtements et d'armoires électriques.
